# EUROPEAN PATENT APPLICATION

(11) **EP 2 068 255 A2**
(43) Date of publication of application: **10.06.2009**
(21) Application number: 08105948.7
(22) Date of filing: 08.12.2008
(51) Int. Cl.: G06F 17/30

(54) **System and method for efficient generation and management of similarity playlists on portable devices**

(30) Priority: 07.12.2007 US 12182 P
(71) Applicant: MAGIX AG, 10117 Berlin (DE)
(72) Inventor: Herberger, Tilman, 01219, Dresden (DE); Tost, Titus, 01219, Dresden (DE)

(57) **Abstract**

There is provided herein a system and method that allows a user to automatically generate similarity playlists of digital media files on portable devices and, preferably, on devices having minimal computing power. The digital media files will preferably be analyzed with respect to their musical characteristics on a PC and a similarity value will be generated as a result. The similarity value will preferably be stored in a music attribute file on the personal computer. The media files and the music attribute file will be transferred to the portable music playing device. On that portable device a similarity playlist for a each digital media file will be created by comparing the similarity value of the selected song with the similarity value of the stored digital media files and selecting the digital media files that are most similar to the selected digital media file.

## Description

### FIELD OF THE INVENTION

The present invention relates generally to the field of data processing and more specifically to methods, systems and products for generation and management of similarity playlists of media files on portable devices.

### BACKGROUND OF THE INVENTION

In recent years multimedia content has become increasingly available to the general public. High-performance home computers, the ever-increasing availability of broadband data-networks, efficient data compression methods, and high capacity storage media have all played a role in the increasing access to, and demand for, multimedia content. More importantly for purposes of the instant invention, the increase in demand for, and usage of, audio works has been especially noticeable.

A user's audio collection is typically stored in a music database designed for that purpose. Each song typically has some minimal amount of metadata associated with it (e.g., song title, performer, style, etc.) that describes the content. A computerized database allows a user to quickly locate and initiate the playback of a particular song. However, a database-based approach to managing a large number of media items is most useful to the music user who has intimate knowledge of his or her entire music collection and is able to identify with some particularity the song or songs that that are to be played. In most cases, however, the standard database search function will be used to locate music, but that approach is difficult to tune and the results returned tend to be either over or under inclusive.

These sorts of limitations of the database approach to music storage and recall have led to the development of the now well-known playlist concept - i.e., a playlist is a subset of the music database that contains a hand picked collection of music items that the user wishes to listen to sequentially, randomly, etc.

However, building playlists from a database that contains large numbers of songs is a cumbersome process. For example, the user must find and select an individual music item, include it in the playlist, and then find and select the next item, etc.

In view of the difficulties inherent in using playlists to manage a large number of songs in a database, it is no surprise that a number of aids have been developed to streamline the process. For example, shortcuts have been developed that allow the user to insert complete directories into a selected playlist. Additionally, playlist generation routines have been devised that allow the user to specify a genre, artist, year, album, etc., and have all of the music items in the database that match the specified criteria be assembled into a playlist.

These sorts of approaches to music management are geared toward helping the user manage his or her digital music collection on a personal computer. However, because of the increased storage capacity of portable music devices, the problems that have traditionally been encountered when managing large digital music collections on a personal computer have migrated into the realm of mobile music devices. For example, on a portable device with a capacity of 30 GB, the user can, with ease, store more than one thousand music files. Of course, management of very large numbers of music files on a portable device is especially problematic, for example, because of the limited ability to create and store playlists. Creating a playlist on a portable music player that consists of more than a general list of titles from a specific artist or genre is quite difficult. One reason for this is the fact that on portable devices the user's ability to interact with the device is somewhat limited because, among other reasons, the user is forced to operate the device via a user interface that is confined to a small display screen. Such a small display makes it difficult to view and manipulate long lists of items.

The problems associated with managing large music databases have led to the development of enhanced functionality in the database management software that resides on the user's personal computer. The current state-of-the-art provides PC-based software packages that allow a user to create and store playlist files and transfer these playlist files - along with the media items associated with the playlist if necessary - to a portable device where they can be played. This approach provides an easier form of playlist creation and management than would be feasible on a stand-alone portable device. However, this approach has its own problems. First, the portable device needs to store all the music files that are included in the playlist. Although the capacity of some music players is quite large, storage is still limited as compared with the user's personal computer. Additionally, this approach is not typically fully automated since the user still has to select the individual songs that comprise the playlist or specify the criteria for a database search and then arrange for the transfer of the playlist and associated songs to the portable device.

Another disadvantage of the prior art approach is that a playlist, once generated, is a static thing that represents the user's preferences or the search results exactly as specified at one moment in time. If a user were, for example, to want to modify a playlist, the search that created it would need to be manually entered again and/or the user would need to manually search for songs to add to the playlist. When a new song is added to an MP3 player, it will not be included in a playlist that would logically accommodate it unless the user remembers to add that song manually or unless a new search is conducted. Finally, none of these searches will uncover a song that has been misclassified as to genre, artist, etc., nor will a conventional search uncover songs that are sonically similar to a song that is a user favorite.

All of these approaches are user initiated processes and the task of generating a playlist is ultimately left to the user. The playlists generated via the conventional approach are, thus, either the product of a long and cumbersome manual process or they are products of automated algorithms that choose songs based on the associated music metadata (e.g., genre, artist, year, etc.) Additionally all of these approaches provide the user with a static playlist, i.e., the user is provided with a playlist file that does not change during the listening process.

An additional problem that is encountered when managing a large digital music database is that only an exceptional user will be able to remember all the individual music files stored therein. This is especially understandable in view of the fact that some of the files might have been added years earlier. Thus, amassing a large database of music may ultimately be unsatisfying to the user who cannot locate music that is known to be in the database.

Thus, technology has both helped and hindered the end user in that technology allows a user to amass an arbitrarily large number of music files but then does not help manage them. For example, when the user wants to create a playlist, he or she must remember each individual track or artist - an almost impossible undertaking when the user is using a database that has been accumulated over, for example, five years. Even automatic playlist generation routines only deliver a partial solution to this problem because these routines may only scratch the surface of a huge music database.

Thus, what is needed is a system and method that provides a user with a quick and dynamic form of playlist generation on a portable device wherein the playlist generation algorithm creates a playlist that is based on the musical characteristics of the audio files, rather than being based on song metadata.

Heretofore, as is well known in the media editing industry, there has been a need for an invention to address and solve the above-described problems. Accordingly, it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein a system and method for efficient generation and management of similarity playlists on portable media devices. The instant invention will allow users of portable media devices to initiate a playlist generation process that automatically provides playlists that are based on the musical features of the files stored on the portable devices, thereby providing playlists that contain musically similar audio files. The system would be most useful when used in combination with personal computer-based routines that are designed to cooperate with corresponding routines on a portable device. In the preferred embodiment, however, the playlist generation process will be performed on the portable device, although it is certainly possible that the playlist generation process of the instant invention might be performed on the personal computer also.

The methods taught herein will provide the user with attribute data that will be stored on a portable device and that will then be used in the similarity playlist generation process. The attribute database will be generated on the personal computer as part of a preliminary analysis that is performed on each song in a digital music collection. The analysis step is an integral part of the functionality of the instant invention and will preferably be carried out by digital music management software that is resident on or accessible by a personal computer. The analysis step will preferably operate on the entire music database and will preferably generate one attribute record for each song contained therein. The attribute data obtained at this step will then be used as the starting point in the similarity playlist generation process.

The system and method taught herein will preferably be designed to automatically generate a similarity playlist from the digital media files shared on portable devices. It is generally directed to providing users with an easy and simple way of experiencing the content of their entire digital music collection in a completely new way, by using the characteristics of each media item as the basis of a playlist generation process, thereby creating playlists that contain musically similar audio files.

In brief, the instant invention provides the user of a portable device with a method of automatically generating playlists within that device, with the playlists having been created based on the musical characteristics or attributes of the media files themselves. The process will preferably be completely automatic and will be initiated by the user with a minimum of user input. Furthermore, in some preferred variations, the instant method will operate dynamically, i.e., the process will be performed repeatedly on a series of base media items and the instant invention will be able to quickly generate an associated similarity playlist without high resource demands on the portable device.

The preferred method will be implemented by providing a separate, so-called, music attributes file which will be generated on a personal computer, then moved to and stored on the portable device. This file will preferably contain characteristic information about each media item stored in the music database. This information will be utilized during playlist generation on the portable device to create a similarity playlist. The steps involved with similarity playlist generation will preferably be invisible to the user, so that the user will only be required to select a base media item and the instant invention will then automatically create a similarity playlist on the user's portable device. Preferably, the user interface will provide controls that allow the user to initiate the playlist generation process at any time while the portable device is in use.

In another preferred embodiment the user will not need to select a particular base media item as the start item. Instead, the instant invention will automatically provide the user with a proposal for a similarity playlist based on the song that is currently playing. The user will preferably be able to accept or reject the proposed playlist or, provisionally accept it and listen to some or all of the proposed playlist, before deciding whether or not to keep it.

According to a preferred embodiment, the instant invention preferably begins with the activation of the digital media management program, preferably a program that is able to store and manage digital music files. This program will preferably be stored on a personal computer that has access to the digital media content of the user. A first aspect of the instant invention will preferably be carried out on the user's personal computer and will use the user's music database to generate an attributes database. The user will preferably be presented with a graphical user interface that provides access to the functionality of a media management program, e.g., sorting, storing, and archiving digital mediafiles.

The media management program will preferably allow the user to import new digital media files into an existing digital media collection. When a new digital media file is imported, the digital media management program will preferably automatically assign an ID to each imported audio file - the ID being intended to provide a better localization of the audio files within the database of the media management program and is a key workflow element of the instant invention. Thus, in the preferred embodiment, each audio item in the database will have an unique ID.

In the next preferred step, the instant invention will perform an analysis of the imported digital media files, the purpose of the analysis being to determine their musical characteristics. This analysis will preferably calculate or determine at least the following attributes: tonality, spectral flatness or any other frequency spectrum-based calculation, rhythm (e.g., whether the beats are regularly spaced or irregular / syncopated), tempo (e.g., beats per minute), key signature (e.g., base pitch of the song), etc. The result of this analysis will then be preferably stored together with the IDs of the digital media files in the database of the media management program. The analysis results may be stored as a collection of single values describing each individual musical characteristic or as a numerical value into which all the individual values for the different musical characteristics are combined.

A single numerical value that represents the musical characteristics of a song might be calculated in many ways, but in a preferred embodiment each individual musical attribute will be associated with a numerical value, with the resulting numbers added together (or multiplied, a weighted average formed, etc.). For example if a song's tempo is 120 BPM a value of "45" might be added to its attribute score, whereas "42" might be added if the tempo were 110. Such a scale or translation will preferably be provided by the instant inventors for each individual musical characteristic used in the calculation to allow for the creation of a summed numerical value that represents the musical characteristics of a media file.

As a next preferred step, the user will synchronize his or her portable media device with the personal computer, i.e., the content of the portable media device will be synchronized with the content of the database of the media management software. Synchronization will typically be performed by connecting the portable media device to the personal computer, selecting digital media files for transfer to the portable media device, and transferring the selected files. When a portable media device is connected to the personal computer, the digital media management software will preferably automatically detect that connection and will either automatically transfer previously selected digital media files to the portable media device or, in some cases, the software will wait for the user to initiate the selection and transfer of digital media files. The instant invention will then preferably automatically transfer the files that have been newly imported into the digital media management software since the last synchronization.

Preferably as part of the synchronization process, the instant invention will also transfer a music attribute file, which contains the IDs of the digital media files and the attribute analysis results for each digital media file. Preferably, a single music attribute file (e.g., a database) will contain the analysis values for each file on the portable device. However, it would also be possible to provide a separate music attribute file for each digital media file or each type of attribute, etc. The transferred digital media files and the music attribute file will then be stored on the portable device. The music attribute file might be created dynamically during the synchronization process, thereby gathering and utilizing the data contained in the music database. However, it is also possible that the music attribute file will be created during an analysis of the entire database on the personal computer. Preferably, the attribute file will be continually expanded as the music database grows.

In the next preferred step, the user will initiate the playback of an arbitrary digital media file that has been stored on the portable device. The instant invention will then preferably determine the ID of that particular digital media file and the similarity value (analysis result) of that particular digital media file by reading that value (or those values) from the music attribute file. The similarity value will then be used in the construction of a similarity playlist.

As a next preferred step, the instant invention will compare the similarity value with other similarity values in the music attribute file on the portable device, the preferred goal being to select those music items whose attributes are similar to attributes of the selected media item. Preferably, the selected media file will be compared with each item in the database by comparing the analyzed results stored previously. The comparison results (e.g., differences) will preferably then be concatenated and a difference value for each individual media item stored in the database will be created. This difference value will preferably then be compared with a predetermined data range. If the difference value is within this range, the instant invention will preferably include this media item in a similarity playlist by inserting the ID or trackname therein.

The user will preferably be given some control over the playlist generated according to the instant method. For example, the user may be allowed to specify the length of the playlist, whether or not the playlist is to be updated/renewed as new items are added to the music database and the user will be allowed to change the data range used in the similarity calculation, etc.

In the next preferred step, the user will be presented with the similarity playlist that has been generated as discussed above and he or she might accept the content of the playlist or generate a new playlist. Of course, in order to obtain a new playlist that is substantially different, the user may need to modify the data range or some other parameter.

It should be clear that an approach such as this would be a tremendous aid to the user who wants to enhance the experience of his or her digital multimedia files on a portable device by automatically generating playlists that contain songs similar to a base song. Additionally, since the media attributes file is compiled on a personal computer and contains the data necessary for the generation of a similarity playlist, the playlist generation can be implemented on a portable device with even very modest computing power. Thus, playlist generation can potentially take place in any portable device, be it a cell phone, a portable music player, a GPS unit with MP3 playback capabilities, or any other device that is capable of playback of digital media files. Furthermore, the system of the instant invention provides the user with an almost interactionless way of enjoying digital music on his or her portable device since the playlist generation process is executed without user interaction. The instant invention provides a mixture of functionalities, wherein the computationally intensive part, i.e., the music analysis, is carried out on a personal computer and where the results of the analysis are delivered to a portable device for use in playlist generation. The digital media files and the data generated in the analysis step will preferably be transferred to the portable device automatically as part of a synchronization process.

The foregoing has outlined in broad terms the more important features of the invention disclosed herein so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention.

### BRIEF DESCRIPTION OF THE DRAWINGS

Other objects and advantages of the invention will become apparent upon reading the following detailed description and upon reference to the drawings in which:

Figure **1** depicts the general environment of the instant invention.

Figure **2** illustrates a preferred overview of the dataflow of the instant invention.

Figure **3** contains a schematic illustration of the preferred functional allocation between personal computer and portable device.

Figure **4** illustrates a preferred graphical user interface as it might appear on a user's personal computer.

Figure **5** contains an illustration of a preferred graphical user interface of the instant invention as it might appear on a portable music player.

Figure **6** describes possible variations of the content and layout of a media attribute record.

Figure **7** illustrates a preferred general workflow of the instant invention.

Figure **8** depicts a preferred operating logic of the instant invention on a portable music device.

Figure **9** illustrates a preferred workflow of the instant invention on a personal computer.

Figure **10** displays an example of two preferred embodiments of the playlist generation process.

### DESCRIPTION OF THE PREFERRED EMBODIMENTS

Referring now to the drawings, wherein the reference numerals indicate the same parts throughout the several views, there is provided a system and method for efficient generation and management of similarity playlists on portable devices. The instant invention preferably utilizes a playlist generation method that improves on the standard playlist generation methods by utilizing the musical characteristics of the digital media files. The instant invention will preferably enable the user to generate this sort of playlist on a portable device that has limited processing power.

By way of general explanation and in accord with the preferred embodiment, it is to be understood that when the phrase "generation of similarity playlists on portable devices" is used herein that usage will preferably be interpreted as meaning providing an automated process that creates similarity playlists based on a selected media item. Additionally, the instant invention will preferably create the similarity playlist without significant user intervention based on previously generated analysis results.

The preferred embodiment of the instant invention is a combination of analysis and creation operations. The steps associated with these operations are preferably initiated automatically by the instant invention. The user will preferably be provided with a graphical user interface that contains information about the status of the playlist generation process and allows the user to configure individual settings thereof. The analysis operations will preferably be executed without a user interaction and preferably without user input. The analysis operations provide the data that is subsequently used in the playlist generation process. The workflows, additional specifications, and individual embodiments of the instant invention will be described in more detail below.

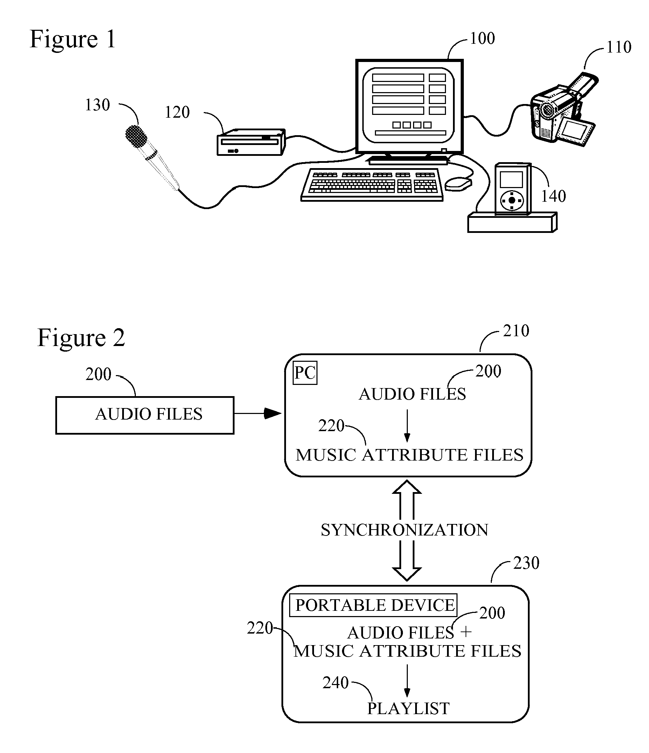

As is generally indicated in Figure **1****,** at least a portion of the instant invention will be implemented in form of software running on a users computer **100.** Such a computer will have some amount of program memory and nonvolatile storage (e.g., magnetic disk, flash RAM, etc.), whether internal or accessed via a network, as is conventionally utilized by such units.

Additionally, it is possible that an external camera **110** of some sort will be utilized with and will preferably be connectible to the computer so that video and/or graphic information can be transferred to and from the computer. Preferably the camera **110** will be a digital video camera, although that is not a requirement, as it is contemplated that the user might wish to utilize still images from a digital still camera in the creation of his or her multimedia work. Further, given the modern trend toward incorporation of cameras into other electronic components (e.g., in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing hardware between it and the computer is utilized. Additionally, a microphone **130** might be utilized so that the user can add voice-over narration to the multimedia work and a CD or DVD reader / burner **120** could be useful for storing user data/content on optical disk.

Additionally, a portable music device **140** such as an MP3 player or at least a portable device capable of playing back digital music files will preferably be connected or connectible to the computer to allow the user to exchange digital music files between the computer and the portable device. In some instances, the portable music device **140** will have an integrated loudspeaker through which digital music files may be performed for a listener. In other instances, the player **140** will likely have at least an electronic connection which is designed to receive a connector for a pair of headphones (e.g., a headphone jack), or a wireless (e.g., Bluetooth or WiFi) connection to same, or a stereo or other connector that is suitable for electronic communication with an external amplifier and/or speaker, etc.

Turning next to Figure **2****,** this figure illustrates a preferred dataflow of the instant invention. As is indicated in this figure, audio files, preferably digital audio files **200,** will be imported into or accessible by a personal computer **210.** The audio files will then preferably be processed by the instant invention on the personal computer and a music attribute file or files **220** will then be generated. These music attribute files will preferably be created via an analysis process that is performed on each individual digital audio file in the music database. Furthermore, the analysis process, and the storage and management of the digital audio files, will preferably be administrated by a digital media management program that is installed on the user's personal computer or is accessible thereby.

A portable device **230,** preferably a portable device capable of playing digital audio material, is another essential part of the instant invention. Such a portable device will preferably be connected to the user's computer (either via wire or wirelessly) and a synchronization process will be activated. This synchronization process will preferably align the content stored in the portable device with that in the user's computer as is conventionally done. Preferably as part of that synchronization process, the digital media management program will scan the content of the connected portable device and initiate an automatic transfer of content to the portable device, if the portable device does not already contain that particular content. A person of ordinary skill in the art will know of such synchronization routines and the different algorithms that may be used to implement such synchronization.

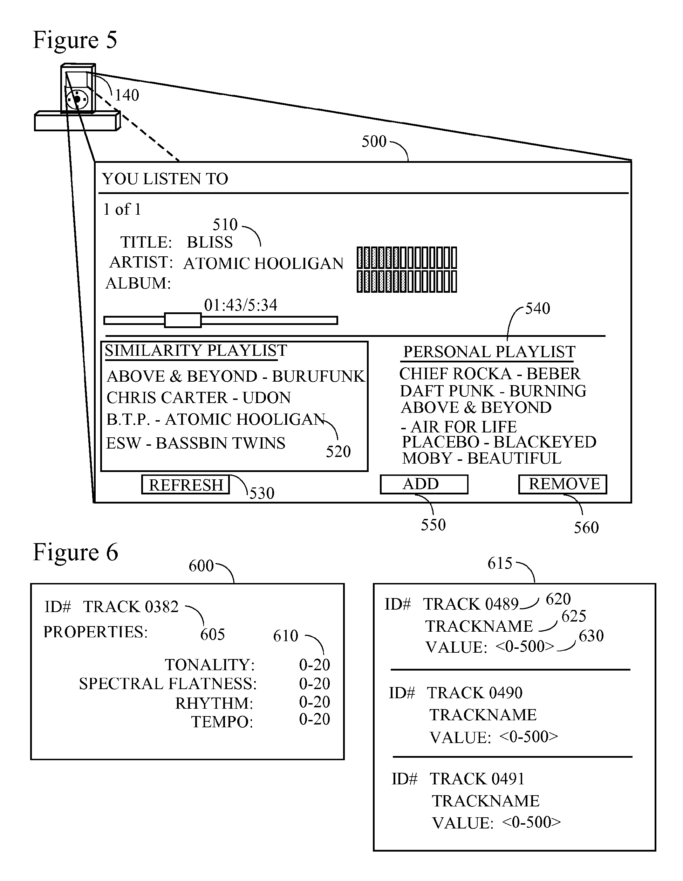

As part of the preferred synchronization process, digital audio files will be transferred to the portable device. Additionally, in the preferred embodiment, the music attribute records **220** will be transferred as well. The structure and data field of the music attributes file is described below in connection with Figure **6****.** The transferred audio files **200** and music attribute file **220** will then be stored on the portable device for use by the instant invention in creating a similarity playlist **240.**

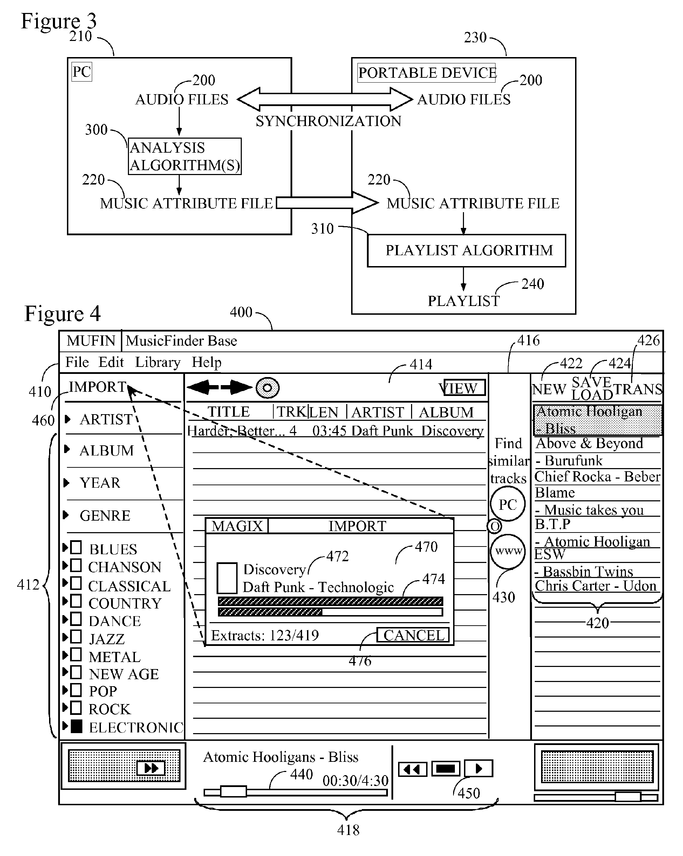

Figure **3** indicates a preferred allocation of functionality of the instant invention between the personal computer and the portable device. A starting point of the instant invention is the audio files **200.** These audio files, or digital music files, are preferably stored initially on a personal computer **210.** Preferably, an analysis program **300** (or programs) will operate on the digital audio files stored on the personal computer. The analysis algorithm will preferably be a part of the digital media management program and an analysis will be performed on each stored digital audio file. As a result, a music attribute record will preferably be created for each media item that contains the results of the analysis process, with all such records preferably being stored together in an attribute file or database **220.** Preferably, the results for each song will be assigned a unique ID that will be associated with the song from which those attributes were calculated and the ID and analysis results will be stored together to facilitate later retrieval of that information.

Connecting a portable music device to the user's computer will preferably activate a synchronization process between the digital media management program on the user's computer and the portable device. This synchronization process preferably will transfer digital audio files and the music attribute records or files to the portable device. Although a number of different synchronization variants could be utilized by the instant invention, preferably the synchronization process will at least transfer the audio files that are not already there to the portable device. Additionally, the music attribute files will also be transferred to the portable device for local storage.

Within the portable device, the similarity playlist algorithm **310** will preferably be activated either manually by the user or automatically, depending on the configuration options stored on the portable device. As is discussed in greater detail below, activating the instant invention on the portable device will result in the creation of a similarity playlist **240** whose contents are selected based on the musical characteristics of a selected file as compared with others in the database.

As is generally indicated in Figure **4****,** in a preferred embodiment of the PC-based portion of the instant invention a user will be presented with a graphical user interface **400** that contains screen components of the sort indicated in this figure. The graphical user interface will preferably be divided into five sections. First, section **410** contains the top-level program options. The options in this section will preferably allow a user to open new digital audio files separately, to edit the specifics of individual files, to access the digital library that is part of the digital media management program, to request help, etc.

The next section **412** will preferably contain a listing of the metadata that relates to the currently selected digital audio file. Preferably, the selectable subsections will include information about the artist, the album title, the year of the release of the digital media, the genre, etc. Preferably, the parameters associated with the currently selected music item will be highlighted (e.g., "electronic" in Figure **4**)

The next section **414** will preferably indicate the additional information about the currently selected digital media file and any other selected file (if any).

The fourth section **416** contains controls that allow the user to run the similarity playlist generation algorithm on a personal computer.

The user will preferably be presented with the similarity playlist after one has been generated. In this exemplary figure, a similarity playlist **420** for the currently selected digital audio file has been generated. The user will have the option of saving the current list **424,** generating another **422,** loading **424** a previously stored playlist, or transferring **426** the playlist to a portable device. Additionally, note that the user will preferably be able to generate the similarity playlist using music stored locally or using music accessed over the Internet by connecting to an online digital music database **430.**

Finally, the fifth section **418** will preferably contain on-screen elements that are used to control the replay of digital media files. This section preferably includes information about the currently playing digital audio file, the full play time of that song, and the current time point of the currently playing digital audio file **440.** Additionally, on-screen transport controls **450** are preferably styled to resemble their counterparts on a conventional VCR and provide a way for the user to use a computer to control playback of the multimedia work through the use of functions such as rewind, play, stop, fast forward etc. Those of ordinary skill in the art will recognize that such transport controls **450** are commonplace and well known in media editing programs.

When the user wishes to add new digital media to the music library of the instant invention, he or she will preferably activate a dedicated import user control **460.** The user will then preferably be presented with a graphical display **470** that contains information concerning the current import process. The user will be presented with the title and artist of the digital audio file that is currently being imported **472** into the digital media library. Furthermore, the graphical display will preferably contain a progress bar that illustrates the progress of importing the current digital audio file and the progress of the overall importing process **474.** The user will preferably be able to stop the import process at any time by initiating the "Cancel" user control **476.** The import process will preferably assign each imported digital audio file an unique ID, which will be stored in the digital media library together with the digital audio file. Additionally, the analysis process that is used to obtain attribute data about each song will be performed on each music item, with the results being stored in the music attribute file/files.

The music attributes file might be implemented as a single file that contains the analysis results for all of the different digital audio files keyed by their respective IDs. The music attribute file might also take the form of many files, each of which contains only the analysis results of a single music item.

Turning next to Figure 5, this figure illustrates how the preferred portable device graphical user interface would appear. In this figure, the portable device **140** is activated and running the operating software installed on the portable device. A user of this portable device will preferably be presented with a screen display **500** that contains a display of components of the sort indicated in this figure. The user will preferably be informed about the currently playing digital audio file **510,** and might be presented with information regarding the title, the artist and the album to which the selected digital audio file belongs. Additionally, a time line will preferably be used in conjunction with a position indicator to give the user a general indication of the location within the multimedia work of the digital audio file that is currently playing.

The user will preferably be presented with a similarity playlist 520 that has been created based on the currently playing song. If the user desires another similarity playlist he or she can initiate the "refresh" user control **530** and the instant invention will generate another playlist. However, based on the user selection of the similarity playlist generation mode, it is possible that a new similarity playlist will be generated each time a new digital audio file is selected for reproduction. The specifics of the different similarity playlist generation modes will be described in greater detail below. In addition to the section representing the similarity playlist, the user will preferably also be able to generate a playlist **540** manually by adding **550** or removing **560** individual digital audio files from the selection.

Turning next to Figure **6****,** this figure represents some possible variations of the media attributes file utilized by the instant invention. There are two preferred approaches regarding the storage and creation of the media attributes file. First, the media attributes file could be a collection of the analysis results **600** for each digital audio file stored in a single file. Preferably, each analysis result of the musical characteristics **610** for a corresponding audio file will be stored in such a file. Preferably, the media attributes file will contain the assigned ID **605** of that digital audio file to allow the storage and later easy access of the stored data.

The second preferred approach **615** utilizes a single music attributes file that contains a number of attribute recordings, one record for each music file. Preferably, the ID number **620** of each audio file, the track name **625** of the file, and a value representing the analysis results **630** will be stored in that record. The value that represents the analysis results is preferably a combination (e.g., sum or weighted sum) of the parameter values that have been determined to characterize the music. The instant invention could be implemented with either of the file structure described above, or some combination.

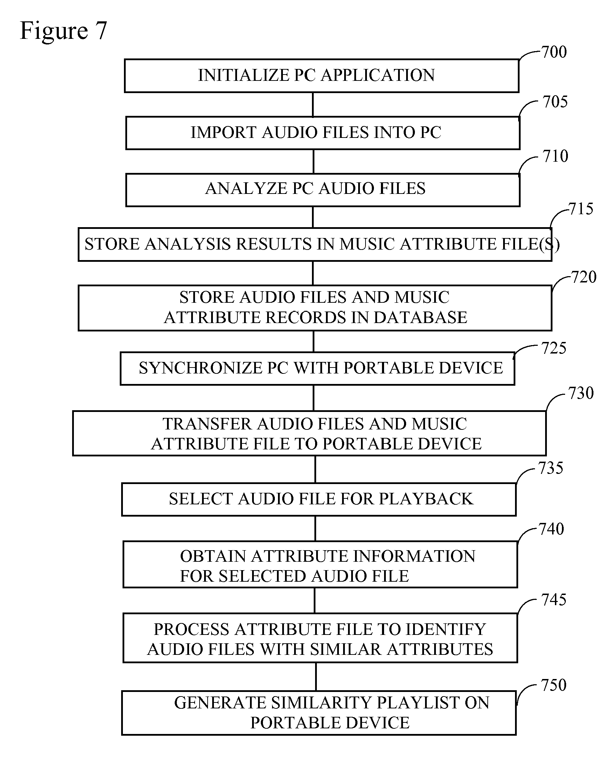

Figure 7 illustrates a preferred general workflow of the instant invention. As a first preferred step **700,** the digital media management program will be started and initialized, according to methods well known to those of ordinary skill in the art, on the computer. Next the user will preferably initiate the import of audio files into the digital media management program **705,** if new files are to be added. This can be manually initiated by the user or activated automatically through a defined list of directories that the media management program is configured to monitor for updates.

In the next preferred step the media management program will execute an analysis **710** of the imported digital media files. The analysis might include the determination of a variety of different musical characteristics, such as tonality, spectral flatness, rhythm/tempo, key signature, center frequency, instantaneous frequency, loudness, etc. The instant invention will then preferably store some or all of the analysis results **715** in a music attributes file, with one record being devoted to each musical work, etc.

In the next preferred step the digital audio files and the music attributes will be stored within the data management program database **720.**

In a next preferred step, the computer will be synchronized with the portable device **725** according to methods well known to those of ordinary skill in the art. As part of the synchronization process the instant invention will preferably transfer the audio files **730** that have been identified for transfer and the associated media attribute files or records to the portable device by extracting the records from the data management program database and creating the media attribute file.

The next step will preferably take place within the portable device, where the user will select a digital audio file for playback **735.** The instant invention will then preferably open the music attribute file and obtain the information that corresponds to the selected audio file (step 740). After successful identification, the instant invention will preferably process the attribute file **745** to identify IDs of audio files with similar attribute values. Finally, the playlist **750** will be displayed on the portable device.

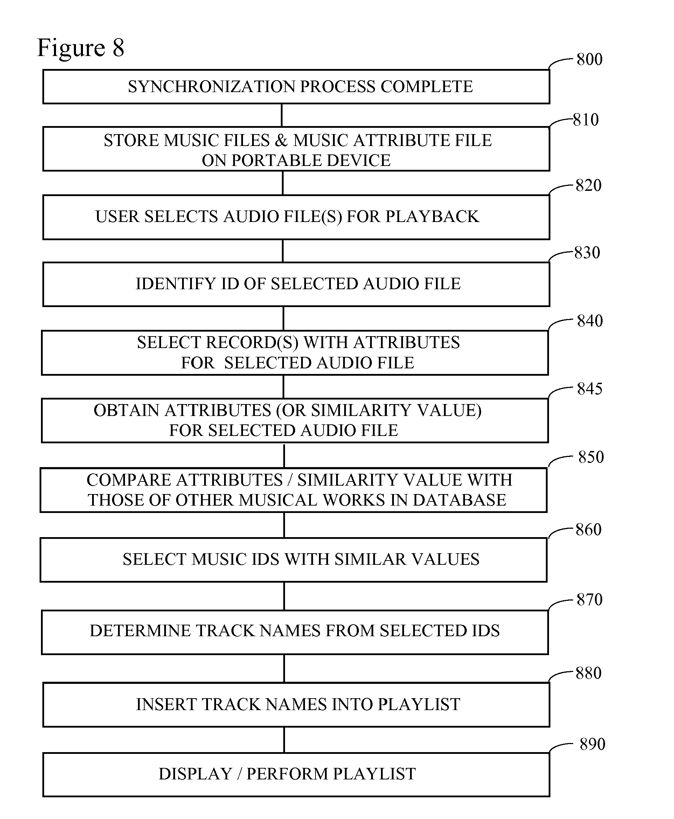

Turning next to Figure **8****,** this figure depicts a preferred workflow of the portion of the instant invention that resides within a portable device. The activity on the portable device preferably starts after the synchronization process **800** has completed.

In the next preferred step, the instant invention will store **810** the transferred digital audio files and the music description file or files on the portable device. The user will preferably then select one audio file or a plurality of audio files for playback **820**. The instant invention will then preferably start to play the selected digital audio file(s) and will, additionally, and invisibly to the user, determine the ID of the currently selected track **830.**

After the ID has been identified, the instant invention will then preferably open the music attributes file and find the record that corresponds to that ID (step **840**). Additionally, the attribute values and/or similarity value will be read (step **845**) for use in the steps that follow.

In the next preferred step, the instant invention will compare each analysis record in the music attribute file with that of the selected audio file, the difference value being some mathematical or other combination of the individual differences between corresponding attribute values for the selected audio file and another file from the database. These difference values will then be compared with a pre-defined interval and, if a difference value is within this interval, the instant invention will preferably determine the ID of the associated digital audio file **850.** Note that in some instances, a composite similarity value might be used for comparison, rather than the collection of individual attributes. In such a case, a similarity value might have been precomputed for each musical work and stored in the attribute database/file.

The IDs that are most similar to the currently selected digital audio file will be used to form a playlist. Those of ordinary skill in the art will recognize that by adjusting, for example, the data range more (or fewer) items could be qualified for the playlist. The mechanism for changing this value might be made a part of the graphical user interface.

As a next preferred step the instant invention will then go through the identified IDs and will synchronize the content of that list with the content on the portable device to determine which of the similar files are also present on the portable device (step **860**).

In the next preferred step, the instant invention will determine the track names 870 reference to the IDs. Next. the instant invention will preferably insert the tracks into the similarity playlist **880,** the tracks being inserted representing the most similar tracks to the selected audio work. The most similar tracks will then be displayed to the user on the portable device **890.**

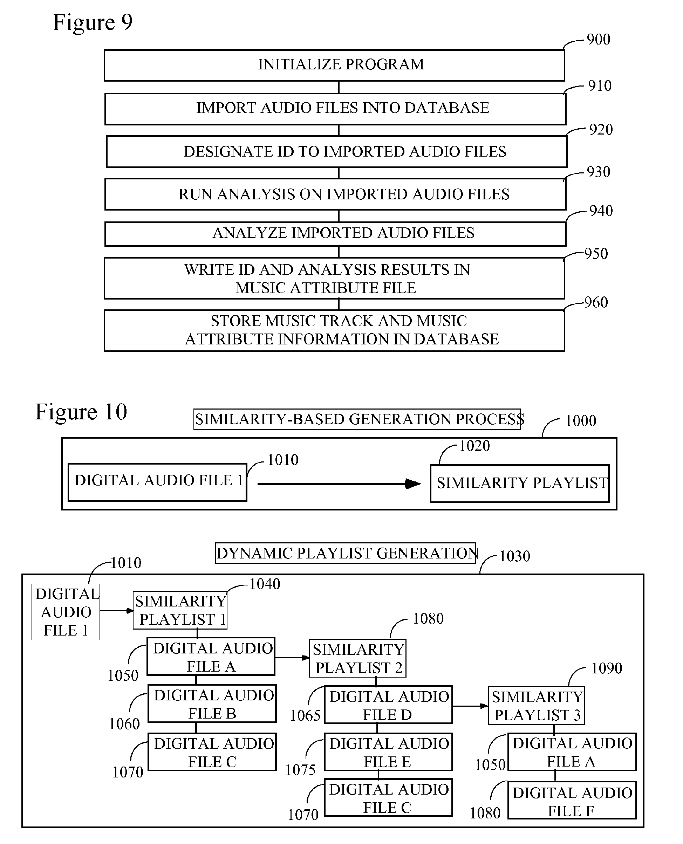

Turning next to Figure **9****,** this figure illustrates a preferred workflow of the instant invention on the users computer. As a first preferred step **900,** the digital media management program will be initialized on the computer according to methods well known to those of ordinary skill in the art.

Next, the user will preferably initiate the import of audio files into the digital media management program **910** or arrange to access them. This might be done by allowing the user to select one or more files or directories, or automatically by scanning a predetermined list of directories.

In the next preferred step, the instant invention will assign ID numbers **920** to each new digital audio file, so that every digital audio file that is stored in the database has an unique (preferably numerical) ID.

As a next preferred step, the instant invention will perform an analysis of the imported digital audio files **930.** That analysis will preferably be activated without input from the user. The analysis might include the determination of a variety of different musical characteristics, such as tonality, spectral flatness, rhythm/tempo, key signature, etc. The analysis results might be stored immediately without any further processing. However, it is preferred that these data values will be normalized and afterwards stored in a music attributes file **950** that is organized by ID. As has been described previously, the music attributes file will preferably be a single database file that contains the IDs of all of the digital audio files together with their associated analysis results.

In the next preferred step, the instant invention will store the audio files and the music attributes in the database of the data management program **960.**

Now turning to Figure **10****,** this figure illustrates the results of two different preferred embodiments of the playlist generation process. Generally the user will have the option to utilize the similarity-based playlist generation process **1000,** wherein the user selects a single digital audio file **1010** and the instant invention generates the similarity playlist **1020** based on the musical characteristics of that selected digital audio file. In an alternative embodiment, the user will be able to choose to utilize the dynamic similarity playlist generation process **1030.** In this mode, a dynamic similarity playlist will be generated each time the user selects a new digital audio file or when the generated similarity playlist moves to the next digital audio file in the similarity playlist. The generation process will preferably be the same as has been described previously in connection with the similarity-based methods.

The user will next preferably select a digital audio file **1010** and the instant invention will generate similarity playlist 1 **1040,** which contains a plurality of digital audio files that, only for illustrative purposes, have been named digital audio file A through C **1050, 1060,** and **1070.** It should be noted that the digital audio files that comprise the different similarity playlists may be different digital audio files because the dynamic similarity playlist generation process will potentially return a different playlist depending on the base work. Note that in this example, these will be some songs that are common to multiple playlists (e.g., file C 1070 and file A **1070**) and others that only appear once (songs **1060**, **1065**, **1075**, and **1080**).

According to this embodiment, the user will listen to the first selected digital audio file (File A **1050**). As the first work is played,the dynamic playlist generation mode will automatically use that song as base work and generate another similarity playlist 1080 based on the musical characteristics of the currently selected digital audio file. The user will then have the option of accepting the new similarity playlist **1080** and listening to its contents, or he or she can choose to use the "old" similarity playlist **1040.** In another variant, the user will be able to choose to continue this dynamic generation process, by, for example, selecting similarity playlist 1080, listening to the first (or a subsequent) song in this list, and selecting a further playlist **1090** that is based on one of the songs in playlist **1080** (i.e., file D **1065** in this example).

### CONCLUSIONS

Of course, many modifications and extension could be made to the instant invention by those of ordinary skill in the art. For example, in one preferred embodiment the user will be able to access an online database of digital music files and have a playlist generated from those files based on the user's selected song. Such an approach could further be enhanced by allowing the user to sample the content of the resulting similarity playlist and, additionally, to purchase content that he or she likes but does not own.

Note that the term "database" should be broadly construed herein to include traditional hierarchical, relational, and flat databases as well as databases that consist of multiple files and/or that are resident on one or more computers.

Additionally, the term "portable device" should be broadly understood to include any sort of device that is portable, that can play music files (e.g., MP3 files, .WAV files, etc.), and that is capable in some sense of implementing a playlist or a similar feature that allows a user to listen to a subset of music items that are drawn from a larger database.

Further, although in the preferred embodiment the ID that is assigned to each musical item in the database will be unique and numerical (e.g., a sequential count, a hashed value based on the song name, genre, etc.) those of ordinary skill in the art will recognize that there are many alternative ways to implement such an ID assignment process.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of performing a plurality of digital musical works on a portable music device, comprising the steps of:
(a) selecting a digital base musical work;
(b) selecting a plurality of musical attributes;
(c) calculating a plurality of musical attribute values from said base musical work, each of said plurality of musical attribute values corresponding to one of said selected musical attributes, and each of said plurality of musical attribute values being representative of some aspect of said base musical work;
(d) obtaining a plurality of digital musical works;
(e) calculating a plurality of musical attribute values from each of said plurality of digital musical works, each of said plurality of musical attribute values calculated from said plurality of digital musical works corresponding to one of said selected musical attributes;
(f) transmitting to said portable musical device said base musical work and said plurality of musical attribute values;
(g) transmitting to said portable music device said plurality of digital musical works and said calculated plurality of attribute values calculated from each of said plurality of digital musical works;
(h) within said portable music device, using at least a plurality of said plurality of musical attribute values calculated from said base musical work to select a plurality of digital musical works from said plurality of digital musical works; and,
(i) using said portable music device to perform for a user at least a portion of said selected plurality of digital musical works, thereby performing said plurality of digital musical works.

2. The method of performing a plurality of digital musical works on a portable music device according to Claim **1,** wherein said portable music device is selected from a group consisting of a cell phone, an MP3 player, and a PDA.

3. The method of performing a plurality of digital musical works on a portable music device according to Claim **1,** wherein each of said plurality of musical attributes are selected from a group consisting of a tonality, a spectral flatness, a rhythm, a tempo, and a key signature.

4. The method of performing a plurality of digital musical works on a portable music device according to Claim **1,** wherein said portable music device has a speaker in electronic communication therewith, and wherein step (i) comprises the step of:
(i) using said portable music device to perform for a user at least a portion of said selected plurality of digital musical works through said speaker, thereby performing said plurality of digital musical works.

5. The method of performing a plurality of digital musical works on a portable music device according to Claim **1,** wherein step (e) comprises the steps of:
(e1) calculating a plurality of musical attribute values from each of said plurality of digital musical works, each of said plurality of musical attribute values calculated from said plurality of digital musical works corresponding to one of said selected musical attributes, and,
(e2) assigning a unique ID to each of said plurality of digital musical works, and, wherein step (g) comprises the step of:
(g1) transmitting to said portable music device said plurality of digital musical works, said calculated plurality of attribute values calculated from each of said plurality of digital musical works, and said assigned ID for each of said plurality of digital musical works.

6. The method of performing a plurality of digital musical works on a portable music device according to Claim **5,** wherein step (h) comprises the steps of:
(h1) within said portable music device, using a at least one of said plurality of musical attribute values calculated from said base musical work to select a plurality of digital musical works from said plurality of digital musical works.

7. The method of performing a plurality of digital musical works on a portable music device according to Claim **6,** wherein step (h) comprises the steps of:
(h1) within said portable music device, using said plurality of musical attribute values calculated from said base musical work to obtain a base work similarity value,
(h2) for each of said plurality of digital musical works, obtaining a musical work similarity value from said plurality of musical attribute values associated therewith, thereby obtaining a plurality of musical work similarity values,
(h3) selecting a threshold value,
(h4) using said threshold value, said base work similarity value and said plurality of musical work similarity values to select a plurality of digital works from among said plurality of digital works.

8. A method of forming a playlist from a plurality digital musical works, comprising the steps of:
(a) selecting a plurality of musical attributes;
(b) calculating a plurality of musical attribute values from each of said musical works, each of said plurality of musical attribute values corresponding to one of said selected musical attributes, and each of said plurality of musical attribute values being representative of said musical work from which it was calculated;
(c) for each of said calculated plurality of musical attribute values calculated from each of said musical works, calculating a single attribute value representative of said plurality of musical attribute values, thereby calculating a single attribute value for each of said plurality of digital musical works;
(d) transmitting to a portable music device said plurality of musical works and at least said single attribute value representative of each of said plurality of musical works;
(e) within said portable music device,
(e1) selecting a base musical work from among said plurality of transmitted digital musical works, said base musical work having at least a base musical work single attribute value associated therewith;
(e2) using at least said base musical work single attribute to select a plurality of said transmitted musical works, said selected plurality of said transmitted musical works forming a playlist, and,
(e3) performing at least one of said selected transmitted musical works within said playlist for a user.

9. The method of performing a plurality of digital musical works on a portable music device according to Claim **8,** wherein said portable music device is selected from a group consisting of a cell phone, an MP3 player, and a PDA.

10. The method of performing a plurality of digital musical works on a portable music device according to Claim **8,** wherein each of said plurality of musical attributes are selected from a group consisting of a tonality, a spectral flatness, a rhythm, a tempo, and a key signature.

11. The method of performing a plurality of digital musical works on a portable music device according to Claim **8,** wherein said portable music device has a speaker in electronic communication therewith, and wherein step (d3) comprises the step of:
(i) using said portable music device to perform for a user at least one of said selected plurality of digital musical works through said speaker, thereby performing said plurality of digital musical works.

12. The method of performing a plurality of digital musical works on a portable music device according to Claim **8,** wherein step (e2) comprises the steps of:
(i) selecting a threshold value,
(ii) for each of said transmitted musical works, accessing at least said single attribute value representative of said plurality of attribute values,
(iii) using said threshold value, said base work similarity value, and said accessed single attribute values to select a plurality of said transmitted musical works, said selected plurality of said transmitted musical works forming a playlist.

13. The method of performing a plurality of digital musical works on a portable music device according to Claim **8,** further comprising the steps of:
(f) storing in a computer readable medium said playlist.

14. The method of performing a plurality of digital musical works on a portable music device according to Claim **13,** wherein said computer readable medium is selected from a group consisting of computer RAM, magnetic disk, optical disk, flash RAM, a writable CD, and, a writable DVD.

15. A method of forming a playlist from a plurality digital musical works, comprising the steps of:
(a) within a first computing device,
(a1) importing said plurality of digital musical works;
(a2) storing said plurality of digital musical works in computer readable form in a music database;
(a3) selecting a plurality of said digital musical works;
(a4) selecting a plurality of musical attributes;
(a5) for each of said selected digital musical works and for each of said selected musical attributes, calculating a musical attribute value from said selected digital musical work, said musical attribute value being representative of some aspect of said digital musical work it was calculated from, thereby producing a plurality of musical attribute values for each of said selected digital musical works;
(a6) storing in a computer readable format any of said musical attribute values so-calculated;
(b) bringing a second computing device different from said first computing into electronic communication with said first computing device;
(c) synchronizing said first computing device with said second computing device, thereby transmitting from said first computing device to said second computing device at least
(c1) any of said selected digital musical works not already present on said second computing device, and,
(c2) any of said stored musical attribute values not already present on said second computing device;
(d) within said second computing device,
(d1) selecting a base musical work from among said selected digital musical works, said base musical work having at least plurality of base musical work attribute values associated therewith;
(d2) using at least said plurality of base musical work attribute values to select a plurality of said selected musical works, said selected plurality of said selected musical works forming a similarity playlist, and,
(d3) performing at least one of said digital musical works in said similarity playlist for a user.

16. The method of forming a playlist from a plurality digital musical works according to Claim **15,** wherein said second computing device is selected from a group consisting of a cell phone, an MP3 player, and a PDA.

17. The method of forming a playlist from a plurality digital musical works according to Claim **15,** wherein each of said plurality of musical attributes are selected from a group consisting of a tonality, a spectral flatness, a rhythm, a tempo, and a key signature.

18. The method of forming a playlist from a plurality digital musical works according to Claim **15,** wherein said second computing device has a speaker in electronic communication therewith, and wherein step (d3) comprises the step of:
(d3) performing at least one of said digital musical works in said similarity playlist through said speaking for a user.
